# EUROPÄISCHE PATENTSCHRIFT

(11) **EP 2 999 898 B1**
(45) Veröffentlichungstag und Bekanntmachung des Hinweises auf die Patenterteilung: **25.11.2020**
(21) Anmeldenummer: 14734821.3
(22) Anmeldetag: 02.07.2014
(51) Int. Cl.: F16D 55/224, F16D 66/00

(54) **BREMSZUSPANNEINRICHTUNG FÜR EINE SCHEIBEN-BREMSVORRICHTUNG**
BRAKE APPLICATION DEVICE FOR A DISK BRAKE SYSTEM
DISPOSITIF DE SERRAGE DE FREIN POUR SYSTÈME DE FREINS À DISQUES

(30) Priorität: 11.07.2013 DE 102013213619
(43) Veröffentlichungstag der Anmeldung: 30.03.2016
(73) Patentinhaber: Siemens Mobility GmbH, 81739 München (DE)
(72) Erfinder: ROTHFUSS, Patrick, 85399 Hallbergmoos (DE); SCHAUTT, Martin, 80636 München (DE); SCHIFFERS, Toni, 41812 Erkelenz (DE)
(86) Internationale Anmeldenummer: PCT/EP2014/064093
(87) Internationale Veröffentlichungsnummer: WO 2015/003977

(56) Entgegenhaltungen:
- EP-A1- 1 640 233
- EP-A1- 1 748 213
- DE-A1-102008 015 873
- US-A1- 2001 032 757

## Beschreibung

Die Erfindung betrifft eine Bremszuspanneinrichtung für eine Scheiben-Bremsvorrichtung.

Eine Bremszuspanneinrichtung dieser Art ist in der internationalen Patentanmeldung WO 2007/012560 A1 beschrieben. Die bekannte Bremszuspanneinrichtung ist in einer Ausführung für eine Scheibenbremse mit einem Bremssattel mit einer Einrichtung zum Messen der aktuellen Bremskraft versehen. Die Einrichtung zum Messen weist ein Bauteil auf, das an seinem ersten Ende am Bremssattel befestigt ist und an seinem zweiten Ende frei ist, indem ein Spalt zwischen dem Bauteil und dem Bremssattel gebildet ist. Das zweite Ende ist somit kraftfrei gestellt und nimmt daher an einer Aufweitung des Bremssattels nicht teil, die beim Aufbringen einer Bremskraft eintritt. Das Bauteil bildet somit ein armartiges Referenzelement. Da das Ausmaß der Aufweitung des Bremssattels mit der Größe der Bremskraft einhergeht, kann durch eine Erfassung von Änderungen der Weite des Spaltes im Bereich des freien Endes des Bauteils mittels einer geeigneten Sensoreinrichtung die aktuelle Bremskraft bestimmt werden. Dazu ist die Sensoreinrichtung in unmittelbarer Nähe des freien Endes des Bauteils angebracht.

Eine Bremszuspanneinrichtung für eine Scheiben-Bremsvorrichtung ist auch aus der Druckschrift US 2001/0032757 A1 bekannt. Diese umfasst eine als Träger bezeichnete Bremsbrücke, die an einem nicht drehbaren Teil eines Fahrzeugs befestigbar ist. Die Bremsbrücke weist erste und zweite Sattelträgerwiderlager und ein Querelement auf, wobei sich das Querelement in der Richtung der Rotationsachse der Scheibe der Scheiben-Bremsvorrichtung erstreckt. Über einen ersten eckförmigen Abschnitt und einen zweiten eckförmigen Abschnitts ist das Querelement mit den Sattelträgerwiderlagern verbunden. Ein Kraftsensor befindet sich neben dem ersten eckförmigen Abschnitt. Der Kraftsensor ist geeignet ausgebildet eine sich in dem ersten eckförmigen Abschnitt einstellende Biegung zu erfassen.

Dokument DE 10 2008 015 873 A1 offenbart eine Bremszuspanneinrichtung mit Dehnungsmessstreifen, die auf der Oberfläche der Bremshebeln positioniert sind.

Der Erfindung liegt die Aufgabe zugrunde, eine Bremszuspanneinrichtung für eine Scheiben-Bremsvorrichtung vorzuschlagen, die mit vergleichsweise geringem Aufwand in einfacher Weise eine Bestimmung des Bremsmoments ermöglicht. Zur Lösung dieser Aufgabe weist die erfindungsgemäße Bremszuspanneinrichtung eine Bremshebel tragende Bremsbrücke, eine zur Befestigung der Bremszuspanneinrichtung dienende Aufhängevorrichtung und einen Bereich, der derart biegeweich ist, dass sich darin beim Bremsen in Abhängigkeit des Brems-. moments eine Biegung einstellt, auf, wobei angrenzend an den biegeweichen Bereich eine Bremsmoment-Sensoreinrichtung zum Erfassen der Biegung mit einem armartigen Referenzelement und einem mit der Biegung verstellbaren Fühlerelement vorgesehen ist und wobei der biegeweiche Bereich aus einer Verjüngung zwischen der Bremsbrücke und der Aufhängeeinrichtung gebildet ist.

Es ist zwar aus der deutschen Patentschrift DE 10 2008 063 892 B4 eine Bremsanlage eines Schienenfahrzeugs bekannt, bei der zur Kompensation von Schwankungen der Reibbedingungen direkt das Bremsmoment gemessen wird, jedoch erfolgt hier die Messung des Bremsmoments an Verbindungsteilen zwischen dem Halter einer Bremszangeneinheit und einem Drehgestell des Schienenfahrzeugs. An den Verbindungsteilen ist eine Kraft messende Sensorik angebracht.

Ein wesentlicher Vorteil der erfindungsgemäßen Bremszange besteht darin, dass es im Wesentlichen lediglich eines biegeweichen Bereichs in der Bremszuspanneinrichtung und eines mit der Biegung folgenden Fühlerelementes zusätzlich zu dem Referenzelement in der Sensoreinrichtung bedarf, um nach an sich bekannten Sensorprinzipien aus der Stellung des Fühlerelementes zu dem Referenzelement eine Messgröße zu gewinnen, die dem Bremsmoment entspricht. Ein weiterer Vorteil wird darin gesehen, dass es nicht einer Schätzung des Reibkoeffizienten bedarf, um das Bremsmoment ermitteln zu können.

Dem Bremsmoment proportionale Verbiegungen sind in der Nähe der Aufhängevorrichtung besonders ausgeprägt.

Die Ausbildung des biegeweichen Bereichs aus der Verjüngung zwischen der Bremsbrücke und der Aufhängeeinrichtung bietet die vorteilhafte Möglichkeit, bei einer als Bremszange ausgebildeten Bremszuspanneinrichtung die Verjüngung in einer Platte der als Bremsbrücke ausgebildeten Tragvorrichtung vorzusehen.

Grundsätzlich ist der Einsatz der erfindungsgemäßen Bremszuspanneinrichtung aber keinesfalls auf Scheibenbrems-Bremsvorrichtungen mit Bremszange beschränkt, sondern ist auch bei Scheibenbrems-Vorrichtungen mit Bremssattel und bei Klotzbremsen anwendbar, die auf eine Radlauffläche wirken.

Vorteilhaft ist es ferner, wenn das armartige Referenzelement den biegeweichen Bereich überstreckt.

Bei einer bevorzugten Ausführungsform der erfindungsgemäßen Bremszuspanneinrichtung ist das armartige Referenzelement mit seinem einen Ende auf der aufhängevorrichtungsnahen Seite des biegeweichen Bereichs befestigt, und das Fühlerelement ist auf der aufhängevorrichtungsfernen Seite des biegeweichen Bereichs angebracht; ferner ist eine Bremsmoment-Sensoreinheit vorhanden, die die Position des Referenzelements zu dem Fühlerelement in eine dem Bremsmoment entsprechende Bremsmoment-Messgröße umsetzt.

In diesem Zusammenhang wird es auch als vorteilhaft erachtet, wenn das Fühlerelement an der Bremsbrücke und das armartige Referenzelement unterhalb der Aufhängeeinrichtung angebracht ist.

Ferner ist vorteilhafterweise das Fühlerelement unterhalb der Biegeachse des biegeweichen Bereichs befestigt und die Bremsmoment-Sensoreinheit so ausgeführt, dass sie eine dem Winkel zwischen dem Fühlerelement und dem Referenzelement entsprechende Bremsmoment-Messgröße erzeugt.

Die Bremsmoment-Sensorvorrichtung kann bevorzugt als opto-elektronische Sensoreinrichtung oder als Halleffekt-Sensoreinrichtung ausgeführt sein. Dann ist es vorteilhaft, wenn die Bremsmoment-Sensoreinrichtung aus einem am freien Ende des Referenzelements angebrachten, ersten Sensorelement und einem am Fühlerelement befestigten, zweiten Sensorelement besteht, das zu dem ersten Sensorelement benachbart liegt.

Ergänzend und zur Überprüfung der in oben beschriebener Weise ermittelten Bremsmomente kann es auch vorteilhaft sein, in der Aufhängevorrichtung einen Kraftmessbolzen vorzusehen.

Als besonders vorteilhaft wird eine Ausführungsform der erfindungsgemäßen Bremszuspanneinrichtung angesehen, bei der an mindestens einem Bremshebel der Bremszuspanneinrichtung mindestens eine Bremszuspannkraft-Sensoreinrichtung mit einem Fühlerorgan derart angebracht ist, dass sie eine dem Ausmaß der Biegung des Bremshebels beim Bremsen entsprechende Bremszuspannkraft-Messgröße abgibt. Damit ergibt sich nämlich der Vorteil, dass durch die zusätzliche Messung der Bremszuspannkraft eine Plausibilisierung der Bremsmoment- und der Bremszuspann-Messgröße vorgenommen werden kann und die beiden Messgrößen abgeglichen werden können. Hochdynamische Bremsregelvorgänge können somit präzise umgesetzt werden.

Die Bremszuspannkraft-Sensoreinrichtung kann in unterschiedlicher Weise ausgestaltet sein. Als besonders vorteilhaft wird es erachtet, wenn die Bremszuspannkraft-Sensoreinrichtung außer dem Fühlerteil ein Referenzteil aufweist, das Referenzteil einseitig an seinem dem Lagerpunkt des Bremshebels zugewandten Ende befestigt ist und das Fühlerteil derart mit dem Bremshebel verbunden ist, dass es den Verbiegungen des Bremshebels folgt; ferner ist eine Bremszuspannkraft-Sensoreinheit vorhanden, die die Position des Referenzteils zu dem Fühlerteil in eine der Bremszuspannkraft entsprechende Bremszuspannkraft-Messgröße umsetzt. Die Bremszuspannkraft-Sensoreinrichtung für sich kann somit konstruktiv genau so ausgebildet sein, wie die Bremsmoment-Sensoreinrichtung, was sich günstig auf die Herstellungskosten der Bremszuspanneinrichtung auswirkt.

In diesem Zusammenhang ist es auch vorteilhaft, das Referenzteil und das Fühlerteil auf mindestens einer Seitenfläche des Bremshebels zu positionieren und die Bremszuspannkraft-Sensoreinheit so auszuführen, dass sie eine dem Winkel zwischen dem Fühlerteil und dem Referenzteil entsprechende Bremszuspannkraft-Messgröße erzeugt.

Grundsätzlich ist es allerdings auch möglich, das Referenzteil und das Fühlerteil auf einer Innen- und/oder einer Außenfläche des Bremshebels zu positionieren und die Bremszuspannkraft-Sensoreinheit so auszuführen, dass sie eine dem Abstand des Fühlerteils von dem Referenzteil entsprechende Bremszuspannkraft-Messgröße erzeugt.

Bei der erfindungsgemäßen Bremszuspanneinrichtung ist es ferner vorteilhaft, die Bremszuspannkraft-Sensoreinheit aus einem am freien Ende des Referenzteils angebrachten, ersten Sensorteil und einem an dem Fühlerteil befestigten, zweiten Sensorteil zu bilden. Dabei kann das erste Sensorteil vorteilhafterweise in das Referenzteil integriert sein.

Die Bremszuspannkraft-Sensoreinheit kann - wie die Bremsmoment-Sensoreinrichtung - eine opto-elektronische Sensoreinheit oder eine Halleffekt-Sensoreinheit sein.

Außerdem kann auch hier in vorteilhafter Weise eine Funkverbindung von der Bremszuspannkraft-Sensoreinheit zu einer zentralen Auswerteeinrichtung vorhanden sein.

Zur weiteren Erläuterung der Erfindung sind in
- Fig.1: eine Draufsicht auf ein Ausführungsbeispiel der erfindungsgemäßen Bremszuspanneinrichtung für eine nach Art einer Bremszange ausgebildeten Scheibenbremse, in
- Fig.2: eine weitere Draufsicht auf dasselbe Ausführungsbeispiel, in
- Fig.3: eine Schnittansicht desselben Ausführungsbeispiels und in
- Fig.4: zur Verdeutlichung des Aufbaus und der Wirkungsweise der Bremszuspannkraft-Sensoreinrichtung desselben Ausführungsbeispiels in einer schematischen Ansicht von oben die in diesem Zusammenhang wesentlichen Komponenten
dargestellt, wobei für dieselben Bestandteile der Bremszuspanneinrichtung in den verschiedenen Darstellungen jeweils dieselben Bezugszeichen verwendet sind.

Die in den Figuren dargestellte Bremszuspanneinrichtung 1 weist eine Aufhängevorrichtung 2 auf, mittels der die Bremszuspanneinrichtung 1 beispielsweise an einem nicht dargestellten Rahmen beispielsweise eines Schienenfahrzeugs, zum Beispiel einem Drehgestell, angebracht werden kann. Die Bremszuspanneinrichtung 1 kann aber auch mit anderen Einrichtungen eines Schienenfahrzeuges fest verbunden werden.

Links und rechts von der Aufnahmevorrichtung 2 erstreckt sich seitlich eine linke, obere Querstrebe 3 und eine rechte obere Querstrebe 4. Dabei können die Aufnahmevorrichtung 2 und die beiden oberen Querstreben 3 und 4 als eine zusammenhängende obere Querstreben-Einheit 5 zum Beispiel als ein Gussteil gefertigt sein, wie es in den Figuren gezeigt ist. Unterhalb der oberen Querstreben-Einheit 5 verläuft eine entsprechende untere Querstreben-Einheit 6, die der oberen Querstreben-Einheit 5 gegenüberliegend angeordnet ist. Die obere und die untere Querstreben-Einheit 5 und 6 sind vorzugsweise fest miteinander verbunden. Als Bindeglied zwischen den beiden Querstreben-Einheiten 5 und 6 ist ein Rahmen 7 vorgesehen. Um zu verhindern, dass durch den Rahmen 7 Fremdkörper wie Schutzpartikel, Bremsbelagstaub, Feuchtigkeit usw. durchdringen können, ist der Rahmen 7 mit einer als Schutzblech dienenden Platte 8 abgeschlossen bzw. ausgefüllt. Vorzugsweise sind der Rahmen 7 mit der Platte 8, die untere Querstreben-Einheit 6 und die obere Querstreben-Einheit 5 einteilig in Form eines Gussteils ausgebildet und stellen dann eine sogenannte Bremsbrücke dar.

An der oberen Querstreben-Einheit 5 befindet sich jeweils eine obere Lagerstelle 9 bzw. 10. Entsprechend sind an der unteren Querstreben-Einheit 6 untere Lagerstellen 11 und 12 vorgesehen, wobei Drehachsen der unteren Lagerstellen 11 und 12 zu den gegenüberliegenden oberen Lagerstellen 9 und 10 koaxial ausgerichtet sind. Somit bilden jeweils einander gegenüberliegende Lagerstellen 9 und 11 bzw. 10 und 12 ein Lagerstellenpaar, wobei die Lagerstellen 9 und 11 ein linkes Lagerstellenpaar und die Lagerstellen 10 und 12 ein rechtes Lagerstellenpaar darstellen.

In Abweichung von dem gezeigten Ausführungsbeispiel können die entsprechenden Lagerstellenpaare auch zu einem einzigen Lager zusammengeführt sein. Allerdings bietet die paarweise Ausgestaltung der Lagerstellen Vorteile hinsichtlich der Verteilung und Abstützung der Lagerkräfte.

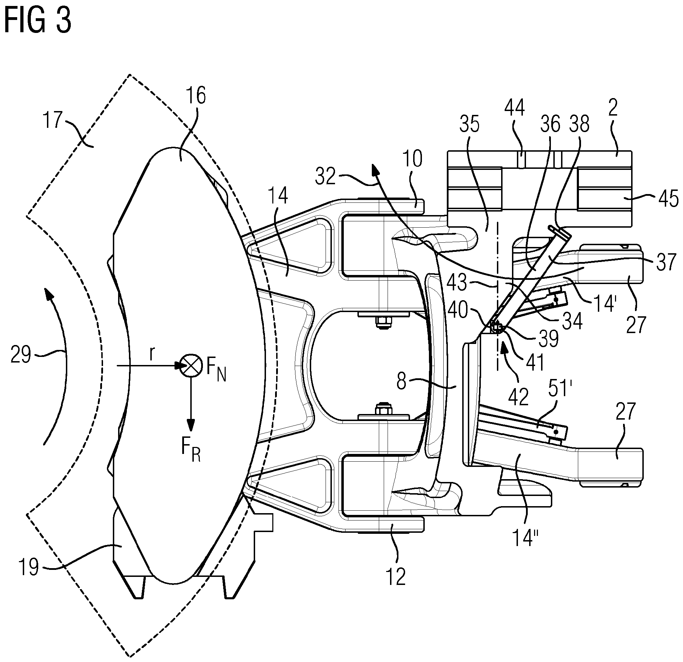

An dem linken Lagerstellenpaar mit den Lagerstellen 9 und 11 und dem rechten Lagerstellenpaar mit den Lagerstellen 10 und 12 sind jeweils ein linker Bremshebel 13 und ein rechter Bremshebel 14 drehbar angebracht. Die beiden Bremshebel 13 und 14 können somit um die obere Querstreben-Einheit 5 und die untere Querstreben-Einheit 6, d.h. um die Bremsbrücke geschwenkt werden. Durch die gegenüberliegende, vorzugsweise achssymmetrische Anordnung der Bremshebel 13 und 14 können die vorderen Enden der Bremshebel aufeinander zu oder voneinander weg bewegt werden. Dies bewirkt, dass an den vorderen Enden der Bremshebel 13 und 14 angebrachte Bremsbeläge 15 und 16 gegen eine abzubremsende Bremsscheibe 17 (vgl. insbesondere Fig. 3) gepresst oder gelöst werden können. Die Bremsscheibe 17 wird bei einer Zuspannbewegung der beiden Bremshebel 13 und 14 förmlich in die Zange genommen, wodurch auf die Bremsscheibe 17 beidseitig eine die Drehbewegung verzögernde Reibkraft aufgebracht wird, welche aus der Normalkraft auf die Bremsbeläge 15 und 16 resultiert.

Die Bremsbeläge 15 und 16 können in an sich bekannter Weise über Belaghalterungen 18 und 19 mit den jeweiligen Bremshebeln 13 und 14 verbunden sein. Die Verbindung zwischen den Belaghalterungen 18 und 19 und den Bremshebeln 13 und 14 ist dabei der Gestalt, dass ein Verkanten oder ein schiefes bzw. schräges Anlegen der Bremsbeläge 15 und 16 an der Bremsscheibe 17 aufgrund der Schwenkbewegung der Bremshebel 13 und 14 möglichst ausgeglichen werden kann. Hierzu können die Belaghalterungen 18 bzw. 19 selbst schwenkbar in den Bremshebeln 13 und 14 gelagert sein, was der besseren Übersichtlichkeit halber aber nicht gezeigt ist.

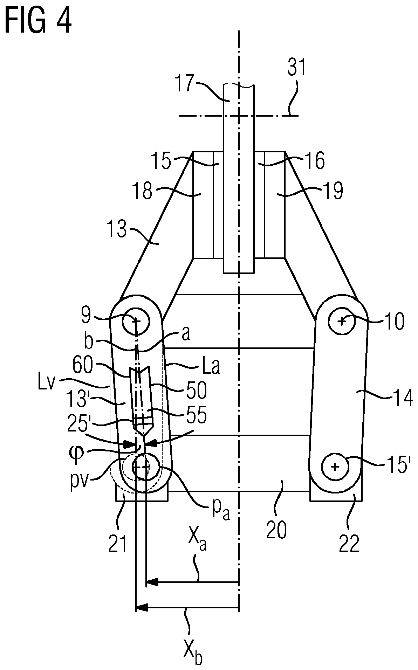

Zur Betätigung der Bremshebel 13 und 14 dient ein Aktor 20, der in Figur 4 schematisch dargestellt ist. Der Aktor 20 ist in die Bremszuspanneinrichtung 1 integriert. Der Aktor 20 ist über linke und rechte Anbindungen 21 und 22 mit den hinteren Enden der Bremshebel 13 und 14 verbunden. Im Falle eines linear ein- bzw. ausfahrbaren Aktors 20 (siehe Figur 4) kann eine Anbindung 21 oder alternativ auch beide Anbindungen 21 und 22 axial verstellt werden.

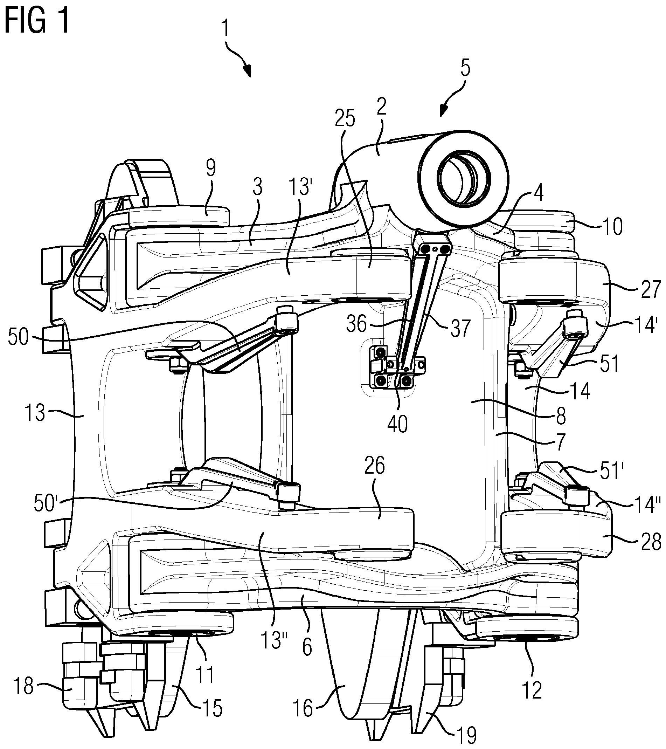

Wie insbesondere die Figuren 1 bis 3 zeigen, weist jeder der Bremshebel 13 und 14 zwei Lagerschenkel 13' und 13" bzw. 14'und 14" auf. Zur Übertragung der Linearbewegung des Aktors 20 auf die Bremshebel 13 und 14 dienen ein linkes und ein rechtes Lagerpaar, bestehend aus den linken oberen und unteren Lagern 25 und 26 an den Lagerschenkeln 13'und 13" sowie den rechten oberen und unteren Lagern 27 und 28 an den Lagerschenkeln 14' und 14". Dabei sind die Bremshebel 13 und 14 drehbar mit dem Aktor 20 bzw. dessen Anbindung 21 und 22 verbunden. So ist die linke Anbindung 21 zwischen den oberen und den unteren Lagerschenkeln 13' und 13" und die rechte Anbindung 22 zwischen den oberen und den unteren Lagerschenkeln 14' und 14" aufgenommen, wie es insbesondere Figur 1 zeigt. Erzeugt nun der Aktor 20 zwischen den Anbindungen 21 und 22 eine (lineare) Verstellbewegung, dann werden die Bremshebel 13 und 14 veranlasst, über ihre zugehörigen Lagerpaare mit den Lagerpaaren 25 und 26 bzw. 27 und 28 um die Bremsbrücke bzw. die obere und untere Querstreben-Einheit 5 bzw. 6 zu schwenken. Zum Zuspannen der Bremse bewegt der Aktor 20 die Bremshebel 13 bzw. 14 an ihren die Lagerschenkel 13'und 13" bzw. 14' und 14" tragenden Enden auseinander, wodurch die die Bremsbeläge 15 und 16 tragenden Enden der Bremshebel 13' und 14' zusammengedrückt werden. Wird umgekehrt verfahren, wird die Bremszange geöffnet.

Der Aktor 20 selbst kann als (elektro-)mechanische, (elektro-)pneumatische oder (elektro-)hydraulische Betätigungseinrichtung ausgeführt sein. Bei einer hydraulischen bzw. pneumatischen Betätigungseinheit kann ein linear ausfahrbarer Hubzylinder als Aktor verwendet werden. Als elektro-mechanische Aktoren können Linearmotoren mit einem die Rotationsbewegung in eine Linearbewegung umsetzenden Getriebe eingesetzt werden. Auch Aktoren, die mit einem Federspeicher ausgerüstet sind, können Verwendung finden.

Zur näheren Erläuterung der Bremsmoment-Sensoreinrichtung wird im Nachfolgenden insbesondere auf die Figur 3 Bezug genommen.

Es wird angenommen, dass die Bremsscheibe 17 in Richtung des Pfeiles 29 rotiert. Durch Andrücken des Bremsbelags 16 gegen die Bremsscheibe 17 wird eine Normalkraft FN aufgebaut. Daraus resultiert eine Reibkraft FR, die über den Reibradius r beginnend von einer Rotationsachse der Bremsscheibe 17 ein Bremsmoment Mr bewirkt. Aufgrund von actio = reactio wird sich dieses Bremsmoment Mr auch am Bremsbelag 16 und damit über die Bremszuspanneinrichtung 1 auf die Aufhängevorrichtung 2 abstützen. Das heißt, durch den Einfluss des Bremsmoments Mr tendiert die Bremszuspanneinrichtung 1 dazu, sich um ihre Aufhängevorrichtung 2 zu verbiegen, wie durch den Pfeil 32 angedeutet ist. Insofern stellt das Maß der Verbiegung einen messbaren Wert für die Größe des Bremsmoments Mr dar.

Um die Messung des Bremsmoments Mr zu optimieren, ist an einer Stelle 34 ein biegeweicher Abschnitt 35 gewählt, der verjüngt bzw. eingeschnürt ist. Durch diese Einschnürung bzw. Verjüngung, die vorteilhafter Weise im Übergang zwischen der Bremsbrücke mit den Querstreben-Einheiten 5 und 6 und der Aufhängevorrichtung 2 platziert ist, wird erreicht, dass trotz der insgesamt biegesteifen Auslegung der Bremsbrücke und der Aufhängevorrichtung 2 ein biegeweicher Bereich 35 vorliegt, der zur Ermittlung einer Verbiegung geeignet ist. Für die Messung ist somit speziell der Bereich 35 mit lokaler Begrenzung in einer ansonsten biegesteifen Konstruktion vorgesehen, der gezielt eine kontrollierte Verbiegung zulässt. Durch eine entsprechende Ausgestaltung der Verjüngung wird dabei erreicht, dass bei wirkendem Bremsmoment Mr die Verbiegung sich quasi durch eine reine Senkrechtbewegung, also eine Auf- und/oder Abbewegung, auszeichnet und überlagerte Bewegungen durch beispielsweise seitliches Wegknicken vermieden werden. Dies ermöglicht einen vereinfachten Aufbau der Bremsmoment-Sensoreinrichtung, da lediglich Verbiegungen in einer einzigen Ebene, nämlich in der in der Figur 3 gezeigten Ebene, erfasst werden müssen.

Entsprechend den maximal auftretenden Bremskräften kann die Verjüngung bzw. Einschnürung im biegeweichen Bereich 35 mehr oder weniger stark ausgeführt werden, so dass stets gewährleistet ist, dass die Bremszuspanneinrichtung 1 im Bereich des biegeweichen Bereichs 35 nicht bricht oder abreißt.

Zur Erfassung der Verbiegung des biegeweichen Bereichs 35 durch das Bremsmoment Mr dient eine Bremsmoment-Sensoreinrichtung 36, die ein armartiges Referenzelement 37 aufweist. Dieses Referenzelement 37 charakterisiert den freien Bremszustand, weil es mit einem Ende fest mit der Aufhängevorrichtung 2 z.B. über eine Schraubverbindung 38 verbunden ist. Da die Aufhängevorrichtung 2 als Verbindungselement zur Befestigung der Bremszuspanneinrichtung 1 dient, ist die Aufhängevorrichtung 2 quasi biegesteif ausgelegt. Somit unterliegt das armartige Referenzelement 37 auch bei hohen Bremsmomenten Mr keinen nennenswerten Verbiegungen.

Ein Fühlerelement 39 der Bremsmoment-Sensoreinrichtung 36 ist mit der Bremsbrücke mit den Querstreben-Einheiten 5 und 6 verbunden und folgt damit den Biegungen des biegeweichen Bereichs 35. Sowohl das Referenzelement 37 an seinem Ende als auch das Fühlerelement 39 sind mit jeweils einem Sensorelement 40 bzw. 41 versehen - beide Sensorelemente 40 und 41 bilden eine Bremsmoment-Sensoreinheit 42 -, wobei das Sensorelement 41 des Fühlerelements 39 auf einer gedachten Achse 43 senkrecht unterhalb des biegeweichen Bereichs 35 angebracht ist, die vertikal durch den biegeweichen Bereich 35 verläuft. Somit kann das Sensorelement 41 die auftretenden Verbiegungen gut erfassen, was die Messung des Bremsmoments Mr begünstigt. Bei einwirkendem Bremsmoment Mr verbiegt sich die Bremszuspanneinrichtung 1 aufgrund des biegeweichen Bereichs 35 in diesem Bereich, so dass die Bremsbrücke mit dem biegeweichen Bereich 35 eine Nickbewegung ausführt, wie durch den Pfeil 32 angedeutet ist. Somit vollzieht das mit der Bremsbrücke verbundene Sensorelement 41 auf dem Fühlerelement 39 gegenüber dem mit dem Referenzelement 37 verbundenen Sensorelement 40 eine Relativbewegung, die von der Bremsmoment-Sensoreinheit 42 erfasst wird. Dabei ist die Relativbewegung jeweils umso größer, je größer das vorherrschende Bremsmoment Mr ist. Somit wird diese erfasste Relativbewegung als stellvertretende Messgröße für das aktuell auftretende Bremsmoment Mr verwendet. Durch eine nicht gezeigte Auswerteeinrichtung kann die ermittelte Bremsmoment-Messgröße in das entsprechende Bremsmoment Mr umgerechnet werden. Die Signalübertragung kann über eine drahtlose Funkstrecke mit der Auswerteeinrichtung erfolgen.

Rotiert die Bremsscheibe 17 in entgegengesetzter Richtung zu dem Pfeil 29, dann funktioniert das Messprinzip analog, wobei die Bremsbrücke in entgegengesetzter Richtung zum Pfeil 32 verbogen wird. Da das Referenzelement 37 den momentfreien Zustand beschreibt, lassen sich positive bzw. negative Relativbewegungen aufgrund positiv bzw. negativ wirkender Bremsmomente leicht erkennen.

Um die Sensorelemente 40 und 41 bzw. die Sensor-Einrichtung 42 zu schützen, kann diese vergossen oder in einem nicht gezeigten Gehäuse integriert werden.

Zusätzlich zu der geschilderten Bremsmoment-Sensoreinrichtung 36 kann als redundanter Sensor ein Kraftmessbolzen dienen, der innerhalb der Aufhängeeinrichtung 2 verbaut werden könnte; dieser Kraftmessbolzen kann die aufgrund des Bremsmomentes Mr hervorgerufenen Biegekräfte innerhalb der Aufhängevorrichtung 2 erfassen. Dieser zusätzliche Sensor könnte in der Aufhängeeinrichtung 2 z.B. an einer Stelle 44 in die Aufhängevorrichtung 2 integriert sein oder im Bereich einer Lagerstelle 45 der Aufhängevorrichtung 2.

Der Aufbau und die Wirkungsweise einer zusätzlichen Bremszuspannkraft-Sensoreinrichtung 50 ist insbesondere aus Figur 4 erkennbar. Wie diese Figur zeigt, hat in der gezeigten Stellung der Aktor 20 die Bremshebel 13 und 14 gespreizt, so dass die Bremsbeläge 15 und 16 an der Bremsscheibe 17 angelegt sind. Spreizt der Aktor 20 die bereits in Anlage mit der Bremsscheibe 17 gebrachten Bremshebel 13 und 14 noch weiter, dann verbiegen sich die Bremshebel - wenn auch nur sehr gering - nach außen aufgrund der vorherrschenden Zuspannkräfte. Die Verbiegung ist in der Figur 4 schematisch nur für den linken Bremshebel 13 strichliert angedeutet. Der Bremshebel 13 ist - wie oben bereits ausgeführt ist- an zwei Stellen gelagert. Da sowohl die Bremsbrücke als auch die Lagerstellen 9 und 10 bzw. 11 und 12 samt Aktor 20 wesentlich steifer als die Bremshebel 13 und 14 ausgelegt sind, verbiegen sich diese quasi nicht. Werden daher die Bremshebel 13 und 14 durch Betätigung des Aktors 20 um die starre Bremsbrücke geschwenkt, stellt sich für den Bremshebel 13 eine Ausgangslage La ein, sobald das Luftspiel überwunden wurde und die Bremsbeläge 13 und 14 in Anlage mit der Bremsscheibe 17 gebracht wurden. Durch weitere Betätigung des Aktors 20 stützt sich der Bremshebel 13 über das Lagerpaar 9 und 11 an der starren Bremsbrücke ab und nimmt beginnend von der Ausgangslage La eine verbogene Lage Lv ein. Der Aktor 20 drückt bzw. verschiebt daher die Anbindung 21 aus der Ausgangsposition Pa heraus in die Stellung Pv, wobei das in der Figur 4 untere Hebelende mitgenommen wird. Insofern weitet sich der Bremshebel 13 auf bzw. verbiegt sich um einen Winkel Φ, der sich aus den gedachten Achsen a und b ergibt, wobei die Achse a die Lagermittelpunkte der Lagerstelle 9 und der in der Ausgangslage La befindlichen Lagerstelle 21 verbindet und die Achse b die Lagerpunkte des Lagers 9 und der in der verbogenen Lage Lv befindlichen Lagerstelle 21 verbindet.

Die Verbiegung des Bremshebels beruht also auf der Zuspannkraft des Aktors 20, so dass die Verbiegung einen repräsentativen Wert für die Bremskraft darstellt, die vom Aktor 20 über die Bremshebel 13 und 14 auf die Bremsbeläge 15 und 16 übertragen wird. Es versteht sich, dass sich die anhand des linken Bremshebels 13 erläuterte Verbiegung auch auf analoge Weise bei dem rechten Bremshebel 14 einstellt.

Deswegen ist, wie die Figur 1 zeigt, nicht nur der linke Bremshebel 13 mit der Bremszuspannkraft-Sensoreinrichtung 50 ausgerüstet, sondern auch der rechte Bremshebel 14 mit einer weiteren Bremszuspannkraft-Sensoreinrichtung 51. Vorzugsweise wird darüber hinaus je Bremshebel 13 bzw. 14 die Bremszuspannkraft-Sensoreinrichtung redundant ausgeführt, so dass ein jeder Hebelarm der beiden Bremshebel 13 und 14 eine Bremszuspannkraft-Sensoreinrichtung aufweist. Demnach hat der in Figur 1 obere linke Hebelarm 13' die Bremszuspannkraft-Sensoreinrichtung 50, der untere Hebelarm 13" die Bremszuspannkraft-Sensoreinrichtung 50', der obere rechte Hebelarm 14' die Bremszuspannkraft-Sensoreinrichtung 51 und der untere rechte Hebelarm 14" die Bremszuspannkraft-Sensoreinrichtung 51'.

Die vier Bremszuspannkraft-Sensoreinrichtungen 50, 50', 51 und 51' sind hinsichtlich Aufbau und Funktion gleich; die Kraftermittlung mittels der Bremszuspannkraft-Sensoreinrichtungen wird daher nur beispielhaft für die Bremszuspannkraft-Sensoreinrichtung 50 an dem oberen linken Hebelarm 13' nachstehend anhand von Fig. 4 erläutert.

Die Bremszuspannkraft-Sensoreinrichtung 50 weist ein Referenzteil 55 auf, das sich in einem gewissen Abstand parallel zu dem Hebelarm 13" erstreckt, wobei das Referenzteil 55 möglichst nahe im Bereich der steifen Bremsbrücke mit dem Bremshebel 13 fest verbunden ist. Da sich nämlich die Bremsbrücke durch deren steife Ausgestaltung bei Betätigung der Bremse quasi nicht verformt, wirken auch auf das Referenzteil 55 nahezu keine Kräfte, die das Referenzteil 55 verbiegen könnten. Das Referenzteil 55 charakterisiert also stets den kraftfreien Bremszustand. Im Gegensatz dazu verbiegt sich der als Fühlerteil der Bremszuspannkraft-Sensoreinrichtung 50 wirkende Bremshebel 13' entsprechend den Bremszuspannkräften, während das Referenzteil 55 seine Form und seine Position nahezu unverändert beibehält. Folglich kann die Verbiegung des Bremshebels 13' bezogen auf das Referenzteil 55 durch die Bremszuspannkraft-Sensoreinrichtung 50 als Maß für die wirkende Zuspannkraft ermittelt werden.

In Figur 4 ist zu erkennen, dass sich das Fühlerteil bzw. der Bremshebelarm 13' ausgehend von der Achse a zur Achse b hin verbiegt, während das Referenzteil 55 seine Position in der mit der Achse a gekennzeichnete Ausgangslage aufrecht erhält. Zur Ermittlung der Verbiegung bzw. Auslenkung des Fühlerteils bzw. Bremshebels 13' gegenüber dem Referenzteil 55 können uneingeschränkt auf jeglichen physikalischen Messprinzipien beruhende Bremszuspannkraft-Sensoreinheiten verwendet werden. Vorteilhafterweise wird zumindest ein Sensorelement einer solchen Sensoreinheit am Ende des Referenzteils 55 integriert, wobei je länger das Referenzteil 55 ausgebildet wird, eine desto größere Verbiegung des Bremshebels 13' durch das Sensorelement detektiert wird.

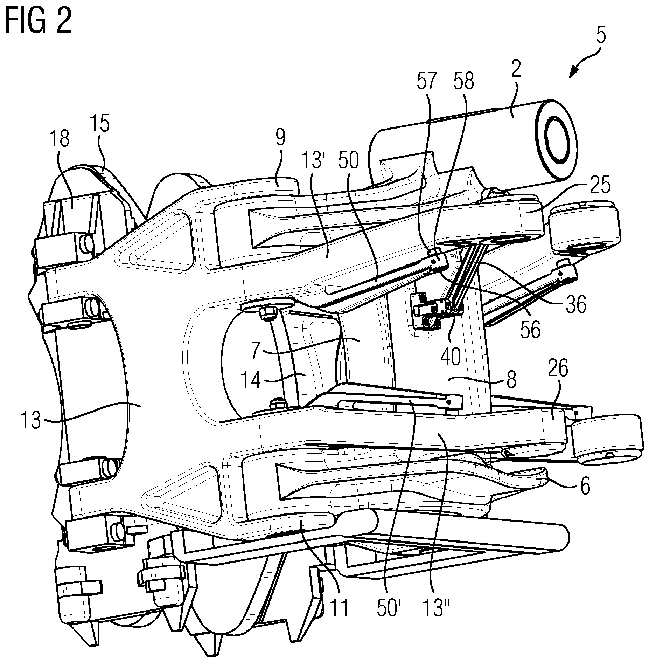

Wie in Figur 2 beispielhaft gezeigt ist, kann eine Bremszuspannkraft-Sensoreinheit 56 aus zwei Komponenten aufgebaut sein, nämlich aus einem ersten Sensorteil als einem Emitter 57 und einem zweiten Sensorteil als einem Empfänger 58.

Die Position dieser Sensorteile können bezüglich Referenzteil 55 und Fühlerteil bzw. Bremshebelarm 13' unterschiedlich angebracht sein. Der Emitter 57 erzeugt ein Signal, das von dem Empfänger 58 detektiert wird. Entsprechend der Verbiegung des Bremshebels 13' wird der auf dem Bremshebel 13' befestigte Emitter 57 mitgenommen. Dadurch wird auch das von dem Emitter 57 ausgegebene Signal entsprechend verändert bzw. abgelenkt, wobei diese Veränderung durch den Empfänger 58 erfasst wird. Das erfasste Messsignal kann dann von dem Empfänger 58 an eine nicht gezeigte Auswerteeinrichtung gesendet werden, wiederum beispielsweise über eine Funkübertragung und dort ausgewertet werden. Als Emitter und Empfänger können beispielsweise opto-elektronische oder Hall-Effekt-Sensorelemente verwendet werden.

Speziell das Referenzteil 55 kann zum Schutz vor äußeren Einflüssen mit dem Bremshebel 13' vergossen sein, z.B. mit einem Harz oder Silikon. Dadurch kann auch der Einfluss von auf den Bremshebel 13' wirkenden Stößen oder Schwingungen gedämpft werden, so dass das Referenzteil 55 stets in unveränderter Form verharrt und tatsächlich keine Verformungen bzw. Verbiegungen erfährt.

Abschließend ist noch darauf hinzuweisen, dass die Erfindung keineswegs nur bei Scheibenbremsen in Schienenfahrzeugen Anwendung finden kann, sondern auch beispielsweise in Windkraftanlagen und Förderanlagen zum Einsatz kommen kann.

## Patentansprüche

1. Bremszuspanneinrichtung (1) für eine Scheiben-Bremsvorrichtung
- mit einer Bremshebel tragenden Bremsbrücke (7, 5, 6),
- mit einer zur Befestigung der Bremszuspanneinrichtung (1) dienenden Aufhängevorrichtung (2) **dadurch gekennzeichnet, dass** die Bremszuspanneinrichtung (1) einen Bereich (35) aufweist, der derart biegeweich ist, dass sich darin beim Bremsen in Abhängigkeit des Bremsmoments eine Biegung einstellt,
- wobei angrenzend an den biegeweichen Bereich (35) eine Bremsmoment-Sensoreinrichtung (36) zum Erfassen der Biegung mit einem armartigen Referenzelement (37) und einem mit der Biegung verstellbaren Fühlerelement (39) vorgesehen ist und
- wobei der biegeweiche Bereich (35) aus einer Verjüngung zwischen der Bremsbrücke (7,5,6) und der Aufhängeeinrichtung (2) gebildet ist.

2. Bremszuspanneinrichtung nach Anspruch 1,
**dadurch gekennzeichnet, dass** das armartige Referenzelement (37) den biegeweichen Bereich (35) überstreckt.

3. Bremszuspanneinrichtung nach einem der vorangehenden Ansprüche,
**dadurch gekennzeichnet, dass** das armartige Referenzelement (37) mit seinem einen Ende auf der aufhängevorrichtungsnahen Seite des biegeweichen Bereichs (35) befestigt ist und das Fühlerelement (39) auf der aufhängevorrichtungsfernen Seite des biegeweichen Bereichs (35) an der Bremszuspanneinrichtung (1) angebracht ist, und eine Bremsmoment-Sensoreinheit (42) vorhanden ist, die die Position des Referenzelements (37) zu dem Fühlerelement (39) in eine dem Bremsmoment entsprechende Bremsmoment-Messgröße umsetzt.

4. Bremszuspanneinrichtung nach Anspruch 3,
**dadurch gekennzeichnet, dass** das Fühlerelement (39) an der Bremsbrücke und das armartige Referenzelement (37) unterhalb der Aufhängeeinrichtung (2) angebracht ist.

5. Bremszuspanneinrichtung nach Anspruch 3 oder 4,
**dadurch gekennzeichnet, dass** das Fühlerelement (39) unterhalb der Biegeachse (34) des biegeweichen Bereichs (35) befestigt ist und
die Bremsmoment-Sensoreinheit (42) so ausgeführt ist, dass sie eine dem Winkel zwischen dem Fühlerelement (39) und dem Referenzelement (37) entsprechende Bremsmoment-Messgröße erzeugt.

6. Bremszuspanneinrichtung nach einem der Ansprüche 3 bis 5, **dadurch gekennzeichnet, dass** die Bremsmoment-Sensoreinheit (42) aus einem am freien Ende des Referenzelements (37) angebrachten, ersten Sensorelement (40) und einem am Fühlerelement (39) befestigten, zweiten Sensorelement (41) besteht, das zu dem ersten Sensorelement (40) benachbart liegt.

7. Bremszuspanneinrichtung nach einem der vorangehenden Ansprüche,
**dadurch gekennzeichnet, dass** die Bremsmoment-Sensoreinheit (42) eine opto-elektronische Sensoreinheit oder eine Halleffekt-Sensoreinheit ist.

8. Bremszuspanneinrichtung nach einem der vorangehenden Ansprüche,
**dadurch gekennzeichnet, dass** in der Aufhängevorrichtung (2) ein Kraftmessbolzen vorgesehen ist.

9. Bremszuspanneinrichtung nach einem der vorangehenden Ansprüche,
**dadurch gekennzeichnet, dass** an mindestens einen Bremshebel (13) der Bremszuspanneinrichtung mindestens eine Bremszuspannkraft-Sensoreinrichtung (50) mit einem Fühlerteil (13') derart angebracht ist, dass sie eine dem Ausmaß der Biegung des Bremshebels (13) beim Bremsen entsprechende Bremszuspannkraft-Messgröße abgibt.

10. Bremszuspanneinrichtung nach Anspruch 9,
**dadurch gekennzeichnet, dass** die Bremszuspannkraft-Sensoreinrichtung (50) zusätzlich ein Referenzteil (55) aufweist,
das Referenzteil (55) einseitig an seinem dem Lagerstelle (9) des Bremshebels (13) zugewandten Ende befestigt ist und das Fühlerteil (13') derart mit dem Bremshebel (13) verbunden ist, dass es den Verbiegungen des Bremshebels (13) folgt, und eine Bremszuspannkraft-Sensoreinheit (56) vorhanden ist, die die Position des Referenzteils (55) zu dem Fühlerteil (13') in eine der Bremszuspannkraft entsprechende Bremszuspannkraft-Messgröße umsetzt.

11. Bremszuspanneinrichtung nach Anspruch 10,
**dadurch gekennzeichnet, dass** das Referenzteil und das Fühlerteil auf einer Innen- und/oder einer Außenfläche des Bremshebels positioniert sind und
die Bremszuspannkraft-Sensoreinheit so ausgeführt ist, dass sie eine dem Abstand des Fühlerteils von dem Referenzteil entsprechende Bremszuspannkraft-Messgröße erzeugt.

12. Bremszuspanneinrichtung nach Anspruch 10,
**dadurch gekennzeichnet, dass** das Referenzteil (55) und das Fühlerteil (13') auf mindestens einer Seitenfläche des Bremshebels (13) positioniert sind und die Bremszuspannkraft-Sensoreinheit (56) so ausgeführt ist, dass sie eine dem Winkel zwischen dem Fühlerteil (13') und dem Referenzteil (55) entsprechende Bremszuspannkraft-Messgröße erzeugt.

13. Bremszuspanneinrichtung nach einem der Ansprüche 9 bis 12,
**dadurch gekennzeichnet, dass** die Bremszuspannkraft-Sensoreinheit (56) aus einem am freien Ende des Referenzteils (55) angebrachten, ersten Sensorteil (57) und einem an dem Fühlerteil (13') befestigten, zweiten Sensorteil (58) besteht.

14. Bremszuspanneinrichtung nach Anspruch 13,
**dadurch gekennzeichnet, dass** das erste Sensorteil (57) in das Referenzteil (55) integriert ist.

15. Bremszuspanneinrichtung nach einem der Ansprüche 9 bis 14,
**dadurch gekennzeichnet, dass** die Bremszuspannkraft-Sensoreinheit eine opto-elektronische Sensoreinheit oder eine Halleffekt-Sensoreinheit ist.

16. Bremszuspanneinrichtung nach einem der Ansprüche 9 bis 15,
**dadurch gekennzeichnet, dass** eine Funkverbindung von der Bremszuspannkraft-Sensoreinheit (50) zu der zentralen Auswerteeinrichtung vorhanden ist.

## Claims

1. Brake application device (1) for a disk brake system
- with brake bridges (7, 5, 6) holding a brake lever,
- with a suspension system (2) serving to fasten the brake application device (1), **characterised in that** the brake application device (1) has a region (35) which is flexible in such a way that a flexural bending occurs as a function of the braking torque when braking,
- wherein a braking torque sensor device (36) for capturing the flexural bending is provided adjacent to the flexible region (35) and comprises an arm-like reference element (37) and a tracer element (39) that can be displaced by the flexural bending and
- wherein the flexible region (35) is formed by a tapering between the brake bridge (7, 5, 6) and the suspension device (2) .

2. Brake application device according to claim 1,
**characterised in that**
the arm-like reference element (37) extends over the flexible region (35).

3. Brake application device according to one of the preceding claims,
**characterised in that**
the arm-like reference element (37) is fastened at one end to that side of the flexible region (35) closest to the suspension system, and the tracer element (39) is attached to the brake application device (1) on that side of the flexible region (35) furthest from the suspension system, and a braking torque sensor unit (42) is provided which converts the position of the reference element (37) relative to the tracer element (39) into a braking torque measured variable that corresponds to the braking torque.

4. Brake application device according to claim 3,
**characterised in that**
the tracer element (39) is attached to the brake bridge and the arm-like reference element (37) is attached below the suspension device (2).

5. Brake application device according to claim 3 or 4,
**characterised in that**
the tracer element (39) is fastened below the neutral axis (34) of the flexible region (35) and
the braking torque sensor unit (42) is so embodied as to generate a braking torque measured variable which corresponds to the angle between the tracer element (39) and the reference element (37).

6. Brake application device according to one of claims 3 to 5, **characterised in that**
the braking torque sensor unit (42) consists of a first sensor element (40) which is attached to the free end of the reference element (37), and a second sensor element (41) which is attached to the tracer element (39) and is located adjacent to the first sensor element (40).

7. Brake application device according to one of the preceding claims,
**characterised in that**
the braking torque sensor unit (42) is an optoelectronic sensor unit or a Hall effect sensor unit.

8. Brake application device according to one of the preceding claims,
**characterised in that**
a force measuring pin is provided in the suspension system (2) .

9. Brake application device according to one of the preceding claims,
**characterised in that**
at least one brake application force sensor device (50) comprising a tracer part (13') is attached to at least one brake lever (13) of the brake application device in such a way that it outputs a brake application force measured variable which corresponds to the extent of the flexural bending of the brake lever (13) when braking.

10. Brake application device according to claim 9,
**characterised in that**
the brake application force sensor device (50) also has a reference part (55),
the reference part (55) is fastened on one side at its end facing the bearing point (9) of the brake lever (13), and the tracer part (13') is so connected to the brake lever (13) as to follow the deformations of the brake lever (13), and
a brake application force sensor unit (56) is provided which converts the position of the reference part (55) relative to the tracer part (13') into a brake application force measured variable which corresponds to the brake application force.

11. Brake application device according to claim 10,
**characterised in that**
the reference part and the tracer part are positioned on an inner and/or outer surface of the brake lever, and the brake application force sensor unit is so embodied as to generate a brake application force measured variable which corresponds to distance of the tracer part from the reference part.

12. Brake application device according to claim 10,
**characterised in that**
the reference part (55) and the tracer part (13') are positioned on at least one lateral surface of the brake lever (13), and the brake application force sensor unit (56) is so embodied as to generate a brake application force measured variable which corresponds to the angle between the tracer part (13') and the reference part (55).

13. Brake application device according to one of the claims 9 to 12,
**characterised in that**
the brake application force sensor unit (56) consists of a first sensor part (57) which is attached to the free end of the reference part (55), and a second sensor part (58) which is attached to the tracer part (13').

14. Brake application device according to claim 13,
**characterised in that**
the first sensor part (57) is integrated in the reference part (55) .

15. Brake application device according to one of claims 9 to 14,
**characterised in that**
the brake application force sensor unit is an optoelectronic sensor unit or a Hall effect sensor unit.

16. Brake application device according to one of claims 9 to 15,
**characterised in that**
a radio connection is provided from the brake application force sensor unit (50) to the central evaluation device.

## Revendications

1. Dispositif (1) de serrage de frein d'un système de frein à disque
- comprenant un pontet (7, 5, 6) de frein portant un levier de frein,
- comprenant un système (2) de suspension servant à fixer le dispositif (1) de serrage de frein, **caractérisé en ce que** le dispositif (1) de serrage de frein a une partie (35), qui est flexible en flexion, de manière à y établir une flexion au freinage en fonction du couple de freinage,
- dans lequel, au voisinage de la partie (35) flexible en flexion, est prévu un dispositif (36) de capteur du couple de freinage pour relever la flexion par un élément (37) de référence de type à bras et un élément (39) de sonde réglable par la flexion, et
- dans lequel la partie (35) flexible en flexion est formée d'une réduction entre le pontet (7, 5, 6) de frein et le dispositif (2) de suspension.

2. Dispositif de serrage de frein suivant la revendication 1, **caractérisé en ce que**
l'élément (37) de référence de type à bras chevauche la partie (35) flexible en flexion.

3. Dispositif de serrage de frein suivant l'une des revendications précédentes,
**caractérisé en ce que**
l'élément (37) de référence de type à bras est fixé, par l'une de ses extrémités, du côté proche du système de suspension de la partie (35) flexible en flexion et l'élément (39) de sonde est monté sur le dispositif (1) de serrage de frein, du côté éloigné du système de suspension de la partie (35) flexible en flexion, et il y a une unité (42) de capteur de couple de freinage, qui transforme la position de l'élément (37) de référence par rapport à l'élément (39) de sonde en une grandeur de mesure du couple de freinage correspondant au couple de freinage.

4. Dispositif de serrage de frein suivant la revendication 3, **caractérisé en ce que**
l'élément (39) de sonde est monté sur le pontet de frein et l'élément (37) de référence de type à bras, en dessous du dispositif (2) de suspension.

5. Dispositif de serrage de frein suivant la revendication 3 ou 4,
**caractérisé en ce que**
l'élément (39) de sonde est fixé en dessous de l'axe (34) de flexion de la partie (35) flexible en flexion et
l'unité (42) de capteur de couple de freinage est réalisée de manière à produire une grandeur de mesure de couple de freinage correspondant à l'angle entre l'élément (39) de sonde et l'élément (37) de référence.

6. Dispositif de serrage de frein suivant l'une des revendications 3 à 5,
**caractérisé en ce que**
l'unité (42) de capteur de couple de freinage est constituée d'un premier élément (40) de capteur, monté à l'extrémité libre de l'élément (37) de référence, et d'un deuxième élément (41) de capteur, qui est fixé à l'élément (39) de sonde et qui est voisin du premier élément (40) de capteur.

7. Dispositif de serrage de frein suivant l'une des revendications précédentes,
**caractérisé en ce que**
l'unité (42) de capteur de couple de freinage est une unité de capteur opto-électronique ou une unité de capteur à effet Hall.

8. Dispositif de serrage de frein suivant l'une des revendications précédentes,
**caractérisé en ce qu'**
un capteur dynamométrique est prévu dans le système (2) de suspension.

9. Dispositif de serrage de frein suivant l'une des revendications précédentes,
**caractérisé en ce que**,
sur au moins un levier (13) de frein du dispositif de serrage de frein, est monté au moins un dispositif (50) capteur de la force de freinage ayant une partie (13') de sonde, de manière à donner une grandeur de mesure de force de serrage de frein correspondant au degré de la flexion du levier (13) de frein lors du freinage.

10. Dispositif de serrage de frein suivant la revendication 9, **caractérisé en ce que**
le dispositif (50) capteur de la force de serrage de frein a, en outre, une partie (55) de référence,
la partie (55) de référence est fixée d'un côté, à son extrémité tournée vers le point (9) de palier du levier (13) de frein, et la partie (13') de sonde est reliée au levier (13) de frein, de manière à suivre le fléchissement du levier (13) de frein, et il y a une unité (56) de capteur de force de serrage de frein, qui transforme la position de la partie (55) de référence, par rapport à la partie (13') de sonde, en une grandeur de mesure de la force de serrage de frein correspondant à la force de serrage de frein.

11. Dispositif de serrage de frein suivant la revendication 10, **caractérisé en ce que**
la partie de référence et la partie de sonde sont placées sur une surface intérieur et/ou extérieure du levier de frein et l'unité de capteur de la force de serrage de frein est réalisée de manière à produire une grandeur de mesure de la force de serrage de frein correspondant à la distance de la partie de sonde à la partie de référence.

12. Dispositif de serrage de frein suivant la revendication 10, **caractérisé en ce que**
la partie (55) de référence et la partie (13') de sonde sont placées sur au moins une surface latérale du levier (13) de frein et l'unité (56) de capteur de la force de serrage de frein est réalisée de manière à produire une grandeur de mesure de la force de serrage de frein correspondant à l'angle entre la partie (13') de sonde et la partie (55) de référence.

13. Dispositif de serrage de frein suivant l'une des revendications 9 à 12,
**caractérisé en ce que**
l'unité (56) de capteur de la force de serrage de frein est constituée d'une première partie (57) de capteur, montée à l'extrémité libre de la partie (55) de référence, et d'une deuxième partie (58) de capteur, fixée à la partie (13') de sonde.

14. Dispositif de serrage de frein suivant la revendication 13, **caractérisé en ce que**
la première partie (57) de sonde est intégrée à la partie (55) de référence.

15. Dispositif de serrage de frein suivant l'une des revendications 9 à 14,
**caractérisé en ce que**
l'unité de capteur de la force de serrage de frein est une unité de capteur opto-électronique ou une unité de capteur à effet Hall.

16. Dispositif de serrage de frein suivant l'une des revendications 9 à 15,
**caractérisé en ce qu'**
il y a une liaison radio de l'unité (50) de capteur de la force de serrage de frein au dispositif d'exploitation central.
